# EUROPÄISCHE PATENTSCHRIFT

(11) **EP 1 393 950 B1**
(45) Veröffentlichungstag und Bekanntmachung des Hinweises auf die Patenterteilung: **04.07.2007**
(21) Anmeldenummer: 03018331.3
(22) Anmeldetag: 12.08.2003
(51) Int. Cl.: B60K 1/02, B60L 9/18

(54) **Triebfahrwerk für Schienenfahrzeuge**
Driven running gear for railway vehicles
Train de roulement pour véhicules ferroviaires

(30) Priorität: 29.08.2002 DE 10239853
(43) Veröffentlichungstag der Anmeldung: 03.03.2004
(73) Patentinhaber: SIEMENS AKTIENGESELLSCHAFT, 80333 München (DE)
(72) Erfinder: Jöckl, Andreas, Dr., 90408 Nürnberg (DE)

(56) Entgegenhaltungen:
- EP-A- 1 247 713
- DE-A1- 3 326 948
- DE-A1- 10 103 538
- DE-A1- 19 830 621
- US-A- 4 686 434

## Beschreibung

Die Erfindung betrifft ein Triebfahrwerk von Schienenfahrzeugen mit Radsätzen.

Gattungsgemäße Triebfahrwerke von Schienenfahrzeugen werden von Asynchronfahrmotoren mit Getriebe angetrieben. Diese sind an einem gemeinsamen Pulswechselrichter elektrisch parallel geschaltet und damit über eine elektrische Schlupfkupplung, d. h. nicht drehzahlstarr, gekoppelt. Eine derartige Anordnung ist in der EP 0 655 363 B1 beschrieben.

Gruppenantriebe mit Synchronfahrmotoren (elektrische Parallelschaltung) führen bei stationärem Betrieb zu einer synchronen, d.h. drehzahlstarren Kopplung, der Radsätze. Die jeweiligen Räder der Radsätze weisen aber aus Toleranzgründen immer unterschiedliche Radsatzdurchmesser auf. Deshalb wird bislang ein Gruppenantrieb mit Synchronfahrmotoren für nicht durchführbar gehalten.

Aus der EP 1 247 713 A2 ist ein Triebfahrwerk für Schienenfahrzeuge bekannt, wobei Einzelräder durch permanenterregte Synchronmotoren angetrieben sind. Zwei gegenüberliegende Einzelräder sind dabei durch Speisung der zwei Synchronmaschinen über einen gemeinsamen Umrichter elektrisch gekoppelt. Der Einsatz permanenterregter Synchronmotoren für Radsätze ist nicht bekannt.

Bei Produktionsmaschinen sind elektrische Mehrmotorenantriebe, die durch einen Umrichter gespeist werden, aus der DE 28 11 292 A bekannt.

Des Weiteren sind gemäß DE 28 29 752 A insbesondere in der Chemieindustrie permanenterregte Synchronmotoren bekannt, die an einem Umrichter betrieben werden.

Der Einsatz permanenterregter Synchronmotoren erstreckt sich hier auf stationäre Anlagen bzw. Antriebe.

Der Erfindung liegt deshalb die Aufgabe zugrunde, ein Triebfahrwerk von Schienenfahrzeugen mit Radsätzen zu schaffen, die durch permanenterregte Synchronfahrmotoren angetrieben werden.

Die Lösung der gestellten Aufgabe gelingt durch ein Triebfahrwerk von Schienenfahrzeugen mit Radsätzen nach Anspruch 1. Vorteilhafte Weiterbildungen sind den Unteransprüchen zu entnehmen.

Dabei wird die spezielle Eigenschaft des Rad-Schiene-Kontakts ausgenutzt, bei dem jede Zugkraftausübung mit mechanischem Schlupf verbunden ist. Über diesen mechanischen Schlupf gleichen sich beim erfindungsgemäßen Gruppenantrieb mit Synchronfahrmotoren eventuelle vorhandene Raddurchmessertoleranzen aus. Durch Einsatz permanenterregter Synchronmotoren bei Triebfahrwerken reduziert sich die Antriebsmasse und es stellt sich ein höherer Wirkungsgrad des Antriebs gegenüber herkömmlichen Antriebssystemen ein. Außerdem trägt das erfindungsgemäße Triebfahrwerk erheblich zur Reduktion der bei vergleichbaren Antriebssystemen erzeugten Geräusche bei.

Die Synchronfahrmotoren, die an einem einzigen Pulswechselrichter hängen, müssen mit gleicher Drehzahl laufen. Es wird dabei auf den Mittelwert aller Messgrößen (z.B. Ströme, Spannungen, Drehzahlen, Polradlagen etc.) geregelt. Die Art der Mittelwertbildung ist dabei frei wählbar, d.h. sowohl die Anzahl der jeweiligen Werte aus denen der Mittelwert gebildet wird als auch eine zeitliche Mittelwertbildung ist möglich.

Dabei ist sowohl eine Mittelwertbildung über alle Synchronfahrmotoren als auch nur über eine vorgebbare Anzahl von Synchronfahrmotoren möglich.

Durch die speziellen Eigenschaften des Rad-Schiene-Kontakts gleicht sich ein eventuell vorhandener mechanischer Schlupf durch den Schlupf zwischen Rad und Schiene aus. Die permanenterregten Synchronmotoren führen dann genau wie bei einer starken Getriebekopplung ein Blindmoment, das zu vergleichbaren Verlusten und Erwärmungen führt.

Dynamisch kann es zum kurzzeitigen Kippen und Wiedersynchronisieren eines Synchronmotors kommen, was aber wegen der geringen Kurzschluss- und Kippmomente aufgrund der vorliegenden Untersuchungsergebnisse keine übergroßen Belastungen des Triebfahrwerks und damit der Mechanik mit sich bringt.

In weiteren vorteilhaften Ausgestaltungen bildet der Synchronfahrmotor mit seinem Rotor direkt einen Teil der Achse der Radsätze, was zu einem Kostenvorteil und einer Masseeinsparung gegenüber herkömmlichen Antriebssystemen führt. Des Weiteren können die Synchronfahrmotoren die Radsätze eines Triebfahrwerks zum einen über Getriebe oder direkt antreiben.

In einer weiteren Ausführungsform der Erfindung findet eine Regelung des Antriebs ohne Drehgeber statt, d.h. es wird nur auf Ströme und Spannungen der Energieversorgung geregelt.Dies führt zu einem vergleichweise minimierten Verdrahtungsaufwand.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert. Darin zeigen:
- FIG 1: einen Gruppenantrieb mit vier Synchronfahrmotoren und einer Drehmomentenregelung auf alle Fahrmotoren,
- FIG 2: einen Gruppenantrieb mit vier Synchronfahrmotoren und einer Drehmomentenregelung auf einen Fahrmotor.

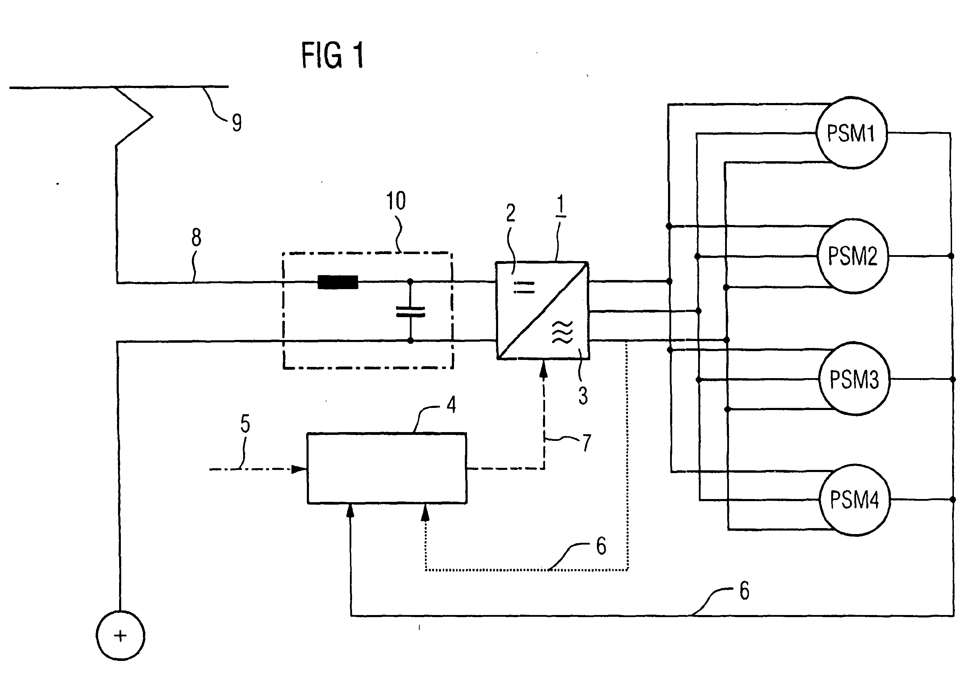

FIG 1 zeigt in einer prinzipiellen Darstellung einen Gruppenantrieb eines Triebwagens mit einem Pulswechselrichter 1 mit vier Synchronfahrmotoren PSM1 bis PSM4. Der Pulswechselrichter 1 hat auf der Gleichspannungsseite 2 über einen Saugkreis 10 elektrischen Kontakt 8 mit dem Fahrdraht 9. Eine Wechselspannungsseite 3 weist in elektrischer Parallelschaltung die permanenterregten Synchronmotoren PSM1 bis PSM4 auf. Jeder dieser permanenterregten Synchronfahrmotoren PSM1 bis PSM4 treibt einen Radsatz eines Triebfahrwerks an. Dabei kann der Antrieb direkt, d.h. der Synchronfahrmotor ist Teil der Achse, als auch über ein Getriebe erfolgen. Die Istwerte 6, d.h. Ströme und Spannungen werden von der Wechselstromseite 3 einem Drehmomentregelung 4 zugeleitet. Der Drehmomentregelung 4 sind vorteilhafterweise Vorgabewerte 5 zugrundegelegt. Daraus ermittelt die Drehmomentenregelung 4 die Sollwerte 7 für die Wechselstromseite 3 des Pulswechselrichters 1.

Es kann ebenso die Drehmomentenregelung 4 auf den Mittelwert aller Messgrößen der Ströme, Spannungen, Drehzahl und Polradlagen zurückgreifen. Dabei sind die jeweiligen Daten der Drehmomentregelung 4 zuzuführen.

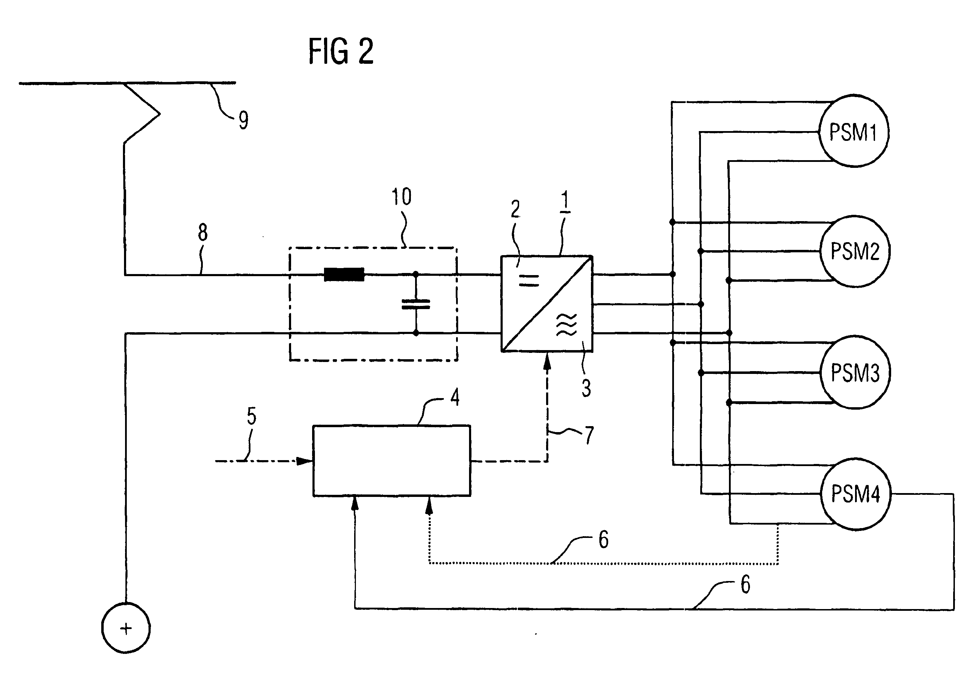

In einer weiteren Ausführungsform der Erfindung gemäß FIG 2 greift die Drehmomentenregelung 4 nur auf die Istwerte 6 eines Synchronfahrmotors PSM1-PSM4 zurück; d.h.sie regelt einen Synchronfahrmotor PSM1-PSM4 alleine und nicht auf den Mittelwert aller Synchronfahrmotoren PSM1-PSM4. Die Nicht geregelten Synchronfahrmotoren laufen damit quasi ungeregelt an einem starren Netz mit. Dies hat Vorteile insbesondere bei ungleichmäßiger Belastung von voraus- und nachlaufenden Synchronfahrmotoren eines Triebfahrwerks.

## Patentansprüche

1. Triebfahrwerk von Schienenfahrzeugen mit Radsätzen, die jeweils einen permanenterregten Synchronfahrmotor (PMS1-PMS4)aufweisen, wobei zumindest zwei Synchronfahrmotoren (PMS1-PMS4) von einem gemeinsamen Pulswechselrichter (1) elektrisch speisbar sind, **dadurch gekennzeichnet, dass** eine Drehmomentenregelung (4) derart ausgebildet ist, dass sie auf die Istwerte (6) einer vorgebbaren Anzahl von Synchronfahrmotoren (PSM1-PSM4) zugreift, die kleiner oder gleich der Gesamtzahl der Synchronfahrmotoren (PSM1-PSM4) ist, um das Drehmoment zu regeln, wobei die nicht zur Regelung des Drehmoments herangezogenen Synchronfahrmotoren (PSM1-PSM4) an einem starren Netz mitlaufen.

2. Triebfahrwerk nach Anspruch 1, **dadurch gekennzeichnet, dass** zumindest ein Teil der Rotoren der Synchronfahrmotoren (PMS1 bis PMS4) einen Teil der Achse eines Radsatzes bilden.

3. Triebfahrwerk nach Anspruch 1 oder 2, **dadurch gekennzeichnet, dass** zumindest ein Synchronfahrmotor (PMS1-PMS4) einen Radsatz über ein Getriebe antreibt.

4. Triebfahrwerk nach einem der vorhergehenden Ansprüche, **dadurch gekennzeichnet, dass** die Drehmomentenregelung (4) auf den Mittelwert der Istwerte (6) aller Synchronfahrmotoren (PSM1-PSM4) zugreift und damit den Mittelwert des Drehmoments regelt.

5. Triebfahrwerk nach einem der vorhergehenden Ansprüche, **dadurch gekennzeichnet, dass** die Triebfahrwerke eine drehgeberlose Regelung aufweisen.

## Claims

1. Driven running gear for railway vehicles with wheel sets, each having a permanent field synchronous traction motor (PSM1-PSM4), with at least two synchronous traction motors (PSM1-PSM4) being able to be supplied electrically by a common pulse-controlled inverter (1), **characterised in that** a torque regulation system (4) is configured in such a manner that it accesses the actual values (6) of a predeterminable number of synchronous traction motors (PSM1-PSM4), which is smaller than or equal to the total number of synchronous traction motors (PSM1-PSM4), to regulate the torque, with the synchronous traction motors (PSM1-PSM4) not being used to regulate the torque operating in parallel with a constant-voltage constant-frequency system.

2. Driven running gear according to claim 1, **characterised in that** at least some of the rotors of the synchronous traction motors (PSM1 to PSM4) form part of the axle of a wheel set.

3. Driven running gear according to claim 1 or 2, **characterised in that** at least one synchronous traction motor (PSM1-PSM4) drives a wheel set by way of a gear system.

4. Driven running gear according to one of the preceding claims, **characterised in that** the torque regulation system (4) accesses the mean value of the actual values (6) of all the synchronous traction motors (PSM1-PSM4) and regulates the mean value of the torque therewith.

5. Driven running gear according to one of the preceding claims, **characterised in that** the driven running gear units feature regulation without rotary transducers.

## Revendications

1. Train de roulement de véhicules ferroviaires avec essieux montés qui comportent chacun un moteur de traction synchrone à aimant permanent (PMS1 à PMS4), au moins deux moteurs de traction synchrones (PMS1 à PMS4) pouvant être alimentés électriquement par un onduleur à impulsions commun (1), **caractérisé par le fait qu**'une régulation de couple (4) est conçue de telle sorte que, pour réguler le couple, elle accède aux valeurs réelles (6) d'un nombre pouvant être prescrit de moteurs de traction synchrones (PSM1 à PSM4), lequel nombre est inférieur ou égal au nombre total des moteurs de traction synchrones (PSM1 à PSM4), les moteurs de traction synchrones (PSM1 à PSM4) qui ne sont pas exploités pour la régulation du couple tournant alors sur un réseau constant.

2. Train de roulement selon la revendication 1, **caractérisé par le fait qu**'au moins une partie des rotors des moteurs de traction synchrones (PMS1 à PMS4) forment une partie de l'axe d'un essieu monté.

3. Train de roulement selon la revendication 1 ou 2, **caractérisé par le fait qu**'au moins un moteur de traction synchrone (PMS1 à PMS4) entraîne un essieu monté par l'intermédiaire d'un engrenage.

4. Train de roulement selon l'une des revendications précédentes, **caractérisé par le fait que** la régulation de couple (4) accède à la valeur moyenne des valeurs réelles (6) de tous les moteurs de traction synchrones (PSM1 à PSM4) et régule ainsi la valeur moyenne du couple.

5. Train de roulement selon l'une des revendications précédentes, **caractérisé par le fait que** les trains de roulement comportent une régulation sans encodeur.
